# EUROPÄISCHE PATENTANMELDUNG

(11) **EP 4 104 955 A1**
(43) Veröffentlichungstag der Anmeldung: **21.12.2022**
(21) Anmeldenummer: 21180372.1
(22) Anmeldetag: 18.06.2021
(51) Int. Cl.: B22F 10/25, B22F 10/85, B22F 12/90, B33Y 10/00, B33Y 50/02, G06N 3/04, G06N 3/08, B23K 9/04, B23K 26/02, B33Y 30/00

(54) **VERFAHREN ZUR ADDITIVEN HERSTELLUNG EINES BAUTEILS**

(71) Anmelder: Siemens Aktiengesellschaft, 80333 München (DE)
(72) Erfinder: Reisch, Raven Thomas, 81379 München (DE); Hauser, Tobias, 89347 Bubesheim (DE); Kamps, Tobias, 80538 München (DE)

(57) **Zusammenfassung**

Die Erfindung betrifft ein Verfahren zu additiven Fertigung eines Bauteils 2 umfassend folgende Schritte:
- Erstellen eines Maschinen Codes
- Erstellen eines generalisierten Anomaliedetektionsmodells und Erstellen eines adaptiven Anomaliedetektionsmodells
- Übertragen des Maschinen Codes und der Detektionsmodelle an eine Steuerungen
- Starten des Fertigungsprozesses
- Überwachung des Prozesses mit Sensoren
- Auswertung von Sensorsignalen des Fertigungsprozesses mit Hilfe des generalisierten Anomaliedetektionsmodells
- paralleles Anlernen eines spezialisiertes Anomaliedetektionsmodell *aus einem* adaptiven Anomaliedetektionsmodells mittels Prozessdaten des laufenden Fertigungsprozesses
- Detektion von Anomalien in der Fertigung des Bauteils mit Hilfe des spezialisierten Anomaliedetektionsmodells während des Fertigungsprozesses.

## Beschreibung

Wire Arc Additive Manufacturing (WAAM) ist ein Beispiel, das die Herstellung großvolumiger, metallischer Bauteile ermöglicht. Ein weiters typisches Verfahren hierfür ist das Laserschmelzverfahren (LMD). Dabei stellt die fehlende Wiederholbarkeit des Prozesses eine Herausforderung an die Qualitätssicherung dar. Um sicherzustellen, dass das Bauteil eine ausreichend hohe Qualität aufweist, muss der Prozess überwacht werden. In-Situ-Monitoringsysteme ermöglichen dabei die Analyse am Ort des Geschehens während des Prozesses.

Werden dann Defekte im Prozess erkannt, wird das gewonnene Wissen über die Defekte bisher nicht verwendet, um Prozessanpassungen umzusetzen. Das liegt daran, dass unbekannt ist, welcher Defekt vorliegt und wie diesem zu begegnen ist. Falls eine Anomalie detektiert wird, muss der Prozess deshalb aktuell abgebrochen werden und das Bauteil ist Ausschuss.

Die Aufgabe der Erfindung besteht darin, ein Verfahren zur additiven Fertigung eines Bauteils bereitzustellen, das gegenüber dem Stand der Technik eine verbesserte Prozesskontrolle aufweist und die Ausschussrate während der Produktion senkt.

Die Lösung der Aufgabe besteht in einem Verfahren zur additiven Fertigung eines Bauteils nach Patentanspruch 1. Das erfindungsgemäße Verfahren umfasst dabei folgende Schritte:
- Erstellen eines Maschinen Codes
- Erstellen eines generalisierten Anomaliedetektionsmodells und Erstellen eines adaptiven Anomaliedetektionsmodells
- Übertragen des Maschinen Codes und der Detektionsmodelle an eine Steuerungen
- Starten des Fertigungsprozesses
- Überwachung des Prozesses mit Sensoren
- Auswertung von Sensorsignalen des Fertigungsprozesses mit Hilfe des generalisierten Anomaliedetektionsmodells
- paralleles Anlernen eines *spezialisiertes Anomaliedetektionsmodell aus einem* adaptiven Anomaliedetektionsmodells mittels Prozessdaten des laufenden Fertigungsprozesses
- Detektion von Anomalien in der Fertigung des Bauteils mit Hilfe des spezialisierten Anomaliedetektionsmodells während des Fertigungsprozesses.

Dabei seien die verwendeten Begriffe wie folgt definiert:

### Maschinen Code

Ein Maschinen Code ist eine nach den Regeln einer höheren Programmiersprache erstellte Folge von Anweisungen, die vom Prozessor eines Gerätes, beispielsweise einer Steuerung mit elektronischer Datenverarbeitung direkt (ohne weitere Übersetzung) ausgeführt werden können. Als Beispiel für einen Maschinen Code für Industriesteuerungen wie beispielsweise Sinumerik sei der G-Code (DIN 66025) genannt. Ein anderes Beispiel wäre spezielle Roboterprogramiersprache wie KRL (Kuka Roboter Language) oder RAPID.

### Modell

Modelle dienen zum einen zur Abbildung eines Realitätsausschnitts, um eine Aufgabe mit Hilfe der Informationsverarbeitung zu lösen. Derartige Modelle heißen Domänenmodelle. Hierunter fallen z. B. Modelle für zu erstellende Software insbesondere für deren Code (in Form von beispielsweise Programmablaufplandiagrammen) und Datenmodelle für die Beschreibung der Strukturen von zu verarbeitenden Daten aus betrieblicher/fachlogische Sicht oder aus technischer Datenhaltungssicht (in Form von beispielsweise neuronalen Netzen).

### Anomalie

Eine Anomalie bezieht sich auf das zu fertigende Bauteil und stellt in der Regel einen Defekt oder die Vorstufe eines Defektes, beispielsweise ein Oxidationscluster in dem entstehenden Bauteil dar. Derartige Anomalien im Bauteil gilt es möglichst während des Fertigungsprozesses mittels Sensoren zu detektieren und ebenfalls während des Fertigungsprozesses zu kompensieren oder zu beseitigen.

### Generalisiertes Anomaliedetektionsmodell

Ein Modell, z.B. ein neuronales Netz, eignet sich durch Lernen eine Repräsentation von Trainingsdaten an, damit aus Eingangsdaten Ausgangsdaten berechnet werden können. Trainingsdaten sind beispielsweise Datensätze von Sensordaten aus einem bereits abgelaufenen Fertigungsprozesse, die ein bekanntes, beispielsweise gutes Prozessergebnis in Form eines Bauteils geliefert haben.

Ein Generalisiertes Anomaliedetektionsmodell ist ein auf verfügbaren Trainingsdaten angelerntes Modell; wobei dem Anlernen das Ziel zugrunde liegt, das Modell zu generieren, das eine hohe Genauigkeit bei der Berechnung der Ausgangsdaten basierend auf den Eingangsdaten für alle Parametersätze hat. Das generalisierte Anomaliedetektionsmodell ist bei verschiedenen Parametersätzen einsetzbar, allerdings weist es eine geringere Genauigkeit der Berechnungen im Vergleich zu einem spezialisierten Modell auf. Das spezialisierte Modell ist ein auf einen parametersatzspezifischen Datensatz angelerntes Modell, das auf einem adaptiven Modell basiert. Es wird innerhalb weniger Schritte und/oder innerhalb kurzer Zeit bei einem neuen Parametersatz konditioniert angelernt. Es ist parametersatzspezifisch einsetzbar, weist aufgrund der Spezialisierung im Vergleich zu dem generalisierten Anomaliedetektionsmodell eine höhere Genauigkeit bei der Berechnung von Anomalien auf Basis eines speziellen Parametersatz auf.

### Prozessdaten

Sind alle Daten, die während des Prozesses anfallen. Dazu gehören die Sensorsignale und zumindest teilweise der Prozessparametersatz.

### Prozessparametersatz

Prozessparametersatz umfasst alle während des Prozesses angewandten technischen Größe wie zum Beispiel Position und Geschwindigkeit des Druckkopfes zu einer bestimmten Zeit, insbesondere allerdings Maschineneinstellungen wie beispielsweise Energieeintrag (beispielsweise in Form von Strom und Spannung), Abstand eines Schweißbrenners zum Bauteil, Gasfluss oder Lichtbogenlängenkorrektur.

### Adaptives Anomaliedetektionsmodell

Ist ein auf verfügbare Trainingsdaten konditioniertes (d.h. parametersatzspezifisch) angelerntes Modell auf Basis eines Neuronalen Netzes; wobei das Anlernen (z.B. via Meta-Learning Ansatz, wie beispielsweise Model Agnostic Meta-Learning oder Reptile) das Ziel hat, ein Modell zu generieren, das schnell insbesondere während einer Zeitspanne von 0,5 s bis 3 s und mit wenigen Trainingsdaten bei einem neuen Prozessparametersatz anpassbar ist. Anpassbar bedeutet, dass das Modell mit möglichst wenigen weiteren parametersatzspezifischen Trainingsdaten und/oder wenigen Schritten und/oder in möglichst kurzer Zeit zu einem spezialisierten Zustand gebracht werden kann. Das heißt basierend auf dem adaptiven Modell entsteht das spezialisierte Anomaliedetektionsmodell. Das adaptive Anomaliedetektionsmodell ist für sich genommen nicht direkt für den Einsatz zur Anomaliedetektion geeignet. Es ist deshalb nicht gut dazu geeignet, da es darauf ausgelegt ist, möglichst schnell und mittels einer geringen Anzahl an Trainingsdaten anpassbar zu sein und nicht um möglichst gute Detektionsergebnisse zu erzielen.

### Steuerung

Steuerung ist eine Recheneinheit, die dazu in der Lage ist, Modelle auszuführen und die Daten zu verarbeiten. Beispiele für Steuerungen sind NC (Numerical Control wie Sinumerik), Edge Devices (Industrial Edge oder Sinumerik Edge (ein Rechner, der zwei Netzwerke verbindet und Daten auswerten kann)), ein IPC (Industrial PC ohne Verbindung zum zweiten Netzwerk) oder PLC (Programmable Logic Controller (in Deutsch SPS) wie z. B. Simatic S7)).

### Sensor und Sensorsignal

Ein Sensor, auch als Detektor, (Messgrößen- oder Mess-)Aufnehmer oder (Mess-)Fühler bezeichnet, ist ein technisches Bauteil, das bestimmte physikalische oder chemische Eigenschaften (physikalisch z. B. Wärmemenge, Temperatur, Feuchtigkeit, Druck, Schallfeldgrößen, Helligkeit, Beschleunigung oder chemisch z. B. pH-Wert, Ionenstärke, elektrochemisches Potential) und/oder die stoffliche Beschaffenheit seiner Umgebung qualitativ oder als Messgröße quantitativ erfassen kann. Diese Größen werden mittels physikalischer, chemischer oder biologischer Effekte erfasst und in ein weiterverarbeitbares insbesondere elektrisches Signal, dem Sensorsignal, umgeformt. Ein elektrisches Signal ist eine Spezialform eines physikalischen Signals. Es handelt sich um eine elektrische Größe wie Stromstärke, Spannung oder Widerstand, wenn es in irgendeiner Form variabel ist und somit Informationen aufnehmen und transportieren kann. Als Wert des Signals kommen beispielsweise Gleichwert, Scheitelwert, Frequenz, Phasenverschiebungswinkel oder Tastgrad infrage. Die Werte, die das Sensorsignal liefert, werden als Sensordaten bezeichnet. Auch mathematische Auswertungen also eine Weiterverarbeitung von physikalischen Sensordaten werden als Sensordaten als solche bezeichnet.

### Druckkopf

Als Druckkopf wird das Bauteil einer additiven Fertigungsvorrichtung bezeichnet, das für den Materialauftrag verantwortlich ist. Beim WAAM ist dies das Element, an dem das Ende des aufzuschweißenden Drahtes geführt wird, beim LMD Verfahren ist dies das Element, an dem der Laserstrahl zum Aufschmelzen des Pulvers austritt. Der Druckkopf steht während des Prozesses über ein definiertes Merkmal, beispielsweise der Spitze einer Elektrode oder einer Drahtautrittsöffnung an einer bestimmten Position. Diese Position des Druckkopfes wiederum korreliert räumlich äquidistant mit einem Arbeitspunkt im oder an der Oberfläche des entstehenden Bauteils. Zwischen der Position des Druckkopfes und dem Arbeitspunkt am Bauteil wird deshalb unterschieden, da diese in verschiedenen additiven Fertigungsverfahren nicht räumlich zusammenfallen, aber stets zwangsgesteuert in Zusammenhang stehen.

### Positionsdaten

Positionsdaten sind ein Datensatz, der ausgehend von einem vor Prozessbeginn definierten Koordinatensystems bezüglich diesem einen Ort im Prozessumfeld definiert.

### Digitaler Zwilling

Ein digitaler Zwilling ist eine digitale Repräsentation eines materiellen oder immateriellen Objekts oder Prozesses aus der realen Welt in der digitalen Welt. Digitale Zwillinge ermöglichen einen übergreifenden Datenaustausch. Sie sind dabei mehr als reine Daten und bestehen aus Modellen des repräsentierten Objekts oder Prozesses und können daneben Simulationen, Algorithmen und Services enthalten, die Eigenschaften oder Verhalten des repräsentierten Objekts oder Prozesses beschreiben, beeinflussen, oder Dienste darüber anbieten.

Die beschriebene Erfindung stellt im Kontext des Standes der Technik folgende Vorteil dar. Um mit der hohen Anzahl an Prozessparameter zurecht zu kommen, werden konventionelle Algorithmen, wie beispielsweise Mittelwertbildung in Kombination mit Grenzwertbildung, verwendet. Gerade bei hochfrequenten Daten mit komplexen Mustern in den Daten gehen so Informationen verloren, da sie nicht in der Analyse verwendet werden. Um komplexe Signaleigenschaften dennoch analysieren zu können, kommt das beschriebene adaptive Anomaliedetektionsmodell zum Tragen. Dafür werden eine ausreichende Anzahl an Trainingsdatensätze mit einem Parametersatz im Prozess gesammelt . Mithilfe dieser Daten wird aus dem adaptiven Anomaliedetektionsmodell das auf die ermittelten Parameter spezialisierte Anomaliedetektionsmodell generiert. Besteht dieses, kann es für die Sensorsignale bei diesem speziellen Parametersatz zur Anomaliedetektion angewendet werden. Eine Anpassung der Prozessparameter führt dazu, dass das spezialisierte Modell obsolet wird und die Anpassung mittels des adaptiven Anomaliedetektionsmodell erneut erfolgen muss. Das frühzeitige und sichere Auffinden von Anomalien im entstehenden Bauteil bietet für den Fertigungsprozess erhebliche Vorteile, da entweder ein Ausschuss früher erkannt werden kann und Fertigungsressourcen und Fertigungszeiten eingespart werden können oder im noch vorteilhafteren Fall detektierte Anomalien in situ beseitigt werden können.

In diesem Zusammenhang ist es zweckmäßig, wenn ein bezüglich eines Prozessparametersatz angelerntes adaptive Anomaliedetektionsmodell als spezialisiertes Anomaliedetektionsmodell abgespeichert wird und bei einer erneuten Nutzung des Prozessparametersatzes das spezialisierte Anomaliedetektionsmodell verwendet wird. Dies verkürzt die oben beschriebenen Anlernzeiten mittels des adaptiven Anomaliedetektionsmodells, in der andernfalls nur das generalisierte Anomaliedetektionsmodell zur Verfügung steht.

Ferner kann in vorteilhaftere Weise das adaptive Anomaliedetektionsmodell bei Starten eines zweiten Fertigungsprozesses mit einem zweiten Prozessparametersatz herangezogen werden und mithilfe der neuen Trainingsdaten an diesen angepasst werden um ein weiteres spezialisiertes Modell zu erstellen.

In einer weiteren vorteilhaften Ausgestaltungsform der Erfindung umfasst das Fertigungsverfahren noch folgende Schritt:
- Paralleler Aufbau eines digitalen Zwillings 10 des entstehenden Bauteils 2 während des Prozesses aus den Sensordaten umfassend Positionsdaten detektierter Anomalien 8
- Prädiktion über die Position 12 eines Druckkopfs 14 zu einer bestimmten Zeit mittels des Maschinencodes
- Analyse eines Arbeitsbereiches rund um diese Position in Hinblick auf vorhandene Anomalien mittels des digitalen Zwillings
- Anpassung der Prozessparameter bei Erreichen des Arbeitsbereiches zur Behebung der Anomalie.

Durch die beschrieben Anomaliedetektion können Anomalien frühzeitig erfasst werden und auf diese durch Anpassung der Prozessparameter am Ort oder in der Umgebung der Anomalie im entstehenden Bauteil eingegangen werden, wobei der Prozess stark von der aktuellen Umgebung (insbesondere einer Schmelzzone im entstehenden Bauteil) abhängt. Wenn beispielsweise in Lage drei eine Oxidation als Anomalie auftritt, dann führt dies in der folgenden Lage ebenfalls zu einem abnormalen Prozessverhalten. Gleiches gilt für benachbarte Schweißraupen. Durch die Beschriebene Anomaliedetektion werden zunächst die aktuelle Datenpunkte von Anomalien bereitgestellt. Der Kontext, der zum jeweiligen Zeitpunkt vorhanden ist, wird in der beschriebenen Ausgestaltungsform des Verfahrens aufgegriffen und in die Simulation und Umsetzung von Ausgleichsmaßnahmen eingebracht. So hat eine Oxidation oder eine Formabweichung auch Auswirkungen auf die folgenden Lagen und die hier gesammelten Daten. Auswirkungen von Defekten über mehrere Lagen hinweg werden mit dem beschriebenen Verfahren nun ausreichend beachtet, sodass Defekte über mehrere Lagen miteinander korreliert werden. Somit werden Informationen, die bereits existieren, genutzt, um bessere Ergebnisse in der Datenanalyse im Rahmen des in-situ-Monitorings zu erhalten, und gehen nicht verloren. Zeitlicher und räumlicher Kontext, dem im additiven Fertigungsprozess große Bedeutung zu kommt, wird durch die beschriebene Lösung bei der Datenbewertung gewinnbringend verwendet und Defektbehebungsmaßnahmen können in situ eingeleitet werden.

Als additive Fertigungsverfahren, in dem sich das beschrieben Verfahren vorteilhaft ausgestalten lässt, sind insbesondere das das Lichtbogendraht-Auftragsschweißen (Wire Arc Additive Manufacturing (WAAD)) und das Laser Metall Abscheideverfahren (Laser Metal Deposition (LMD)) geeignet.

Hierzu werden insbesondere in vorteilhafter Weise die Ergebnisse der Anomaliedetektion mittels der Anomaliedetektionsmodelle in den digitalen Zwilling eingebracht.

Insofern ist es auch zweckmäßig, dass der digitale Zwilling in Form einer Punktewolke ausgestaltet ist und zu jedem Punkt der Wolke eine Bewertung zum Prozesszustand hinterlegt sind. Bewertungskriterien sind z. B. die Art der Anomalie (z. B. Oxidation oder Poren). Eine Anomalie ist somit eine Vorstufe eines Defektes, sie kann auch als potentielle Defekt bezeichnet werden.

Bevorzugt wird zu jedem Punkt ein Anomaliewert ermittelt, für dessen Berechnung wiederum in vorteilhafter Weise Informationen, also Prozessdaten und Sensordaten aus Nachbarpunkten innerhalb eines Arbeitsbereiches mit einbezogen werden.

Als Arbeitsbereich wird dabei bevorzugt das räumliche Ausmaß einer zum Beobachtungszeitpunkt vorherrschenden flüssigen Phase herangezogen. Die Form eines Doppel-Ellipsoiden, der mathematisch in der Auswertung gut zu er-fassen ist, hat sich vorteilhaft für die Festlegung des Arbeitsbereiches und dessen virtuelle Übertragung in den digitalen Zwilling erwiesen. Dabei ist es auch zweckmäßig, wenn der Arbeitsbereich kontinuierlich mit der Form und Größe der flüssigen Phase, also eines lokalen Schmelzbades verändert wird. Form und Größe der flüssigen Phase kann beispielsweise mittels einer Schweißkamera erfasst werden oder aus der Bauteiltemperatur und dem aktuellen Energieeintrag abgeleitet werden. Eine Spezialform des Doppel-Ellipsoiden ist der Ellipsoid, der bezüglich seiner halben Längsachse symmetrisch ist. Die Kugel ist eine Spezialform des Ellipsoiden.

Es ist ferner zweckmäßig, dass die Anpassung der Prozessparameter zur Behebung der Anomalie an der Stelle oder in der Umgebung der Anomalie umgesetzt wird, um beispielsweise eine Oxidation mittels lokal erhöhten Wärmeeintrags aufzubrennen und/ oder die Bewegungsgeschwindigkeit des Druckkopfes zu verlangsamen, um eine Poröse Struktur aufzuschmelzen und somit zu beseitigen.

Die Entscheidung, ob zu welchem Zeitpunkt und an welchem Ort Prozessparameter angepasst werden, basiert dabei auf einer Prädiktion, wohin sich der Druckkopf innerhalb einer definierten Zeitspanne gemäß des Maschinencodes bewegt haben wird. Die Umgebung der so berechneten Position wird anschließend nach Anomalien durchsucht (z.B. Abfrage des Octrees mittels Doppelellipsoids). Wenn Anomalien im Umkreis dieser Position vorliegen, werden Gegenmaßnahmen (z.B. Erhöhung des Wärmeeintrags, der Bewegungsgeschwindigkeit) eingeleitet.

Als additive Fertigungsverfahren, in dem sich das beschrieben Verfahren vorteilhaft ausgestalten lässt, sind insbesondere das das Lichtbogendraht-Auftragsschweißen (Wire Arc Additive Manufacturing (WAAD)) und das Laser Metall Abscheideverfahren (Laser Metal Deposition (LMD)) geeignet.

Ein weiterer Bestandteil der Erfindung ist eine Additive Fertigungsvorrichtung zur Durchführung eines Verfahrens nach einem der Verfahrensansprüche umfassend einen Roboterarm, eine Steuerung und einen Druckkopf sowie Sensoren zur Erfassung von Prozessparametern.

Weitere Ausgestaltungsformen der Erfindung und weitere Merkmale werden anhand der folgenden Figuren näher erläutert.

Dabei zeigen:
- Figur 1: eine schematische Darstellung einer Anlage zum Lichtbogendraht-Auftragsschweißen,
- Figur 2: der zeitliche Ablauf beim Trainieren von Anomaliedetektionsmodellen während eines Prozesses,
- Figur 3: Wirkung der Trainingsphase der Anomaliedetektionsmodelle auf die Vorhersagequalität,
- Figur 4: eine Veranschaulichung einer Punktewolke eines digitalen Zwillings eines entstehenden Bauteils,
- Figur 5: ein Arbeitsbereich in Form eines Doppel-Ellipsoids zur Bestimmung von Anomalien.

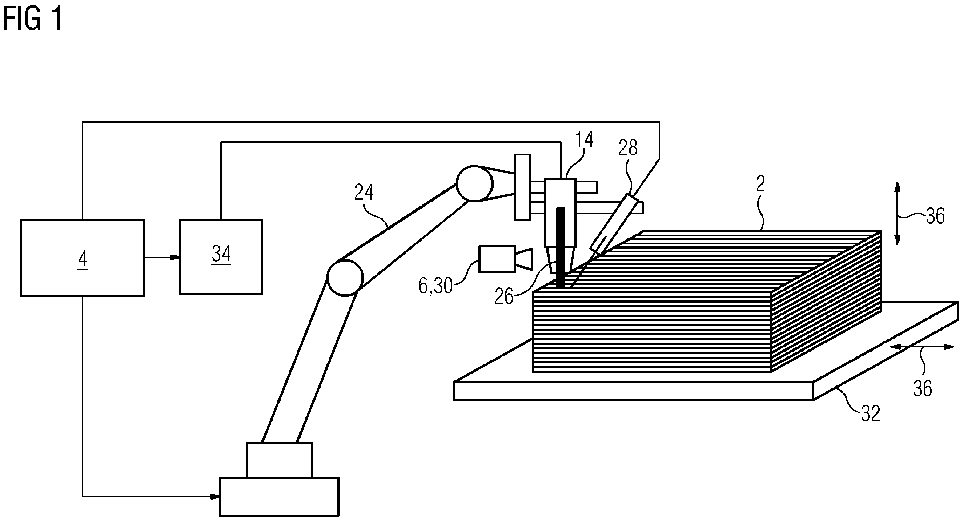

In Figur 1 ist eine schematische Darstellung eines additiven Fertigungsverfahren zur Herstellung eines Bauteils 2 gegeben. Dieses additive Fertigungsverfahren ist exemplarisch als Lichtbogendraht-Auftragsschweißen (im Englischen Wire Arc Additive Manufacturing, WAAM) ausgestaltet. Analog könnte das im Weiteren beschriebene auch auf ein anderes additives Fertigungsverfahren, wie beispielsweise Laser Metal Deposition angewandt werden. Hierbei wird über einen Roboterarm 24 ein Druckkopf 14 mit einer Elektrode 26 auf eine bestimmte Position eines Bauteils 2 gerichtet. Ferner ist ein Schweißdraht 28 vorgesehen, der durch die Elektrode 26 an einer entsprechenden Position 12 des Druckkopfes 14 aufgeschmolzen wird. Ferner ist eine Steuerung 4 vorgesehen sowie eine Energieversorgung 34, über die sowohl die Elektrode 26 als auch ein Vorschub des Schweißdrahtes und des Roboterarms mit Energie versorgt werden. Der gesamte Prozess wird über die Steuerung 4 gesteuert, auf die im Weiteren noch eingegangen wird. Insbesondere wird der Prozess durch eine Vielzahl von Sensoren überwacht. Rein exemplarisch ist ein Sensor 6 in der grafischen Figur 1 in Form einer Schweißkamera 30 dargestellt.

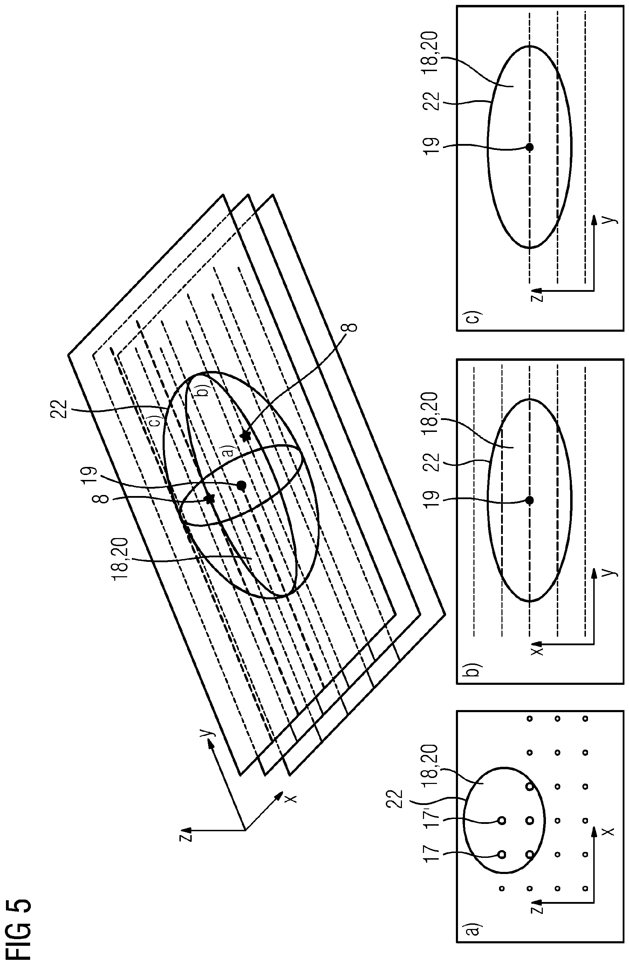

Durch die Schweißkamera 30 können beispielsweise Werte wie die Geometrie einer flüssigen Phase 20, auf die noch in Figur 5 eingegangen wird, ermittelt werden. Weitere Sensordaten sind zum Beispiel die Spannung und der Stromfluss im Prozess, die Temperatur der flüssigen Phase 20, der Vorschub des Druckkopfes 14 sowie die Vorschubgeschwindigkeit des Schweißdrahtes.

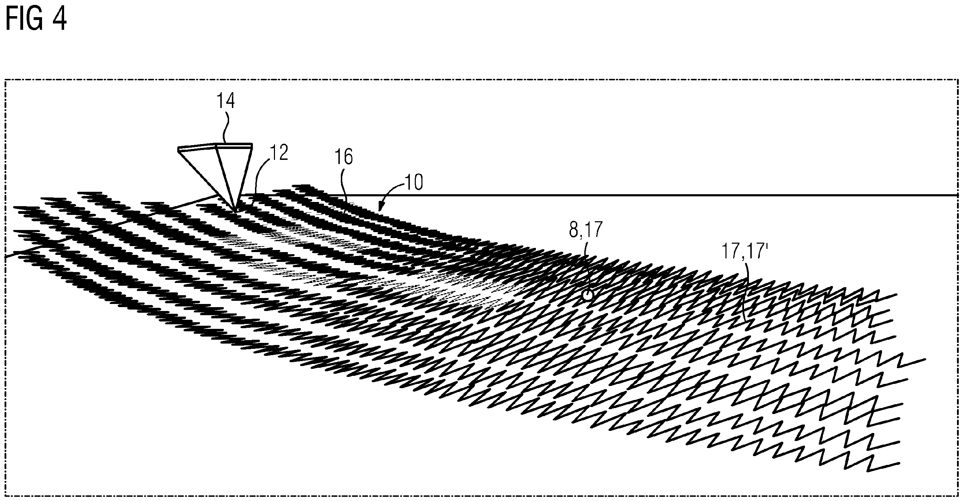

Zu jeder Position 12 des Druckkopfes 14, die eindeutig zuordenbar mit einer Position im Bauteil 2 korreliert, werden bevorzugt sowohl die Positionsdaten in Form eines Punktes in einem Koordinatensystem als auch ein Zeitstempel aufgenommen und an die Steuerung 4 weitergegeben. In der Steuerung 4 oder an einem mit ihr in Verbindung stehenden Rechner wird während des Druckes des Bauteils 2 simultan ein digitaler Zwilling 10 erstellt, der schematisch in Figur 4 veranschaulicht ist. Dabei umfasst der digitale Zwilling 10 eine Punktewolke 16 in der der Druckkopf 14 bzw. seine Position 12 ebenfalls schematisch durch eine Dreiecksspitze dargestellt ist. Hierbei wird für jeden Punkt 17 aus den ermittelten und an die Steuerung übertragenen Sensordaten der Punktewolke 10 ein Anomaliewert berechnet.

Zur Bewertung des Anomaliewertes, auf die noch eingegangen wird, wird zunächst ein Arbeitsbereich 18 am Bauteil 2 definiert (Figur 5), der im digitalen Zwilling durch ein Ellipsoid dargestellt ist, was im Wesentlichen im realen Bauteil 2 eine flüssige Phase 20 umfasst, in der das Material des Schweißdrahtes an einer Oberfläche des Bauteils 2 gerade aufgeschmolzen ist. Bei der Betrachtung flüssigen Phasen hat sich insbesondere ein Doppel-Ellipsoid als zweckmäßig herausgestellt. Der Arbeitsbereich wird insbesondere relevant, wenn eine Korrelation von detektierten Anomalien stattfinden soll, die Anomaliedichte bestimmt werden soll oder Kompensationsstrategien umgesetzt werden sollen

In dieser flüssigen Phase 20 können sich beim Aufbringen des Schweißdrahtes 28 Anomalien 8 ergeben, die Vorstufen von Defekten sein können. Defekte können beispielsweise Oxidation sein, die entstehen, wenn Verunreinigungen auf dem Schweißdrahtes 28 vorhanden sind, bzw. im Prozess eingebracht werden. Auch Lufteinschlüsse in Form von Poren können Anomalien sein und zu Defekten werden. Bei der Bewertung von Anomalien wird dabei nicht nur der jeweilige betrachtete Punkt 17 ausgewertet, sondern es wird dabei auch auf benachbarte Punkte 17' zurückgegriffen, die in dem Arbeitsbereich 18, übertragen auf den digitalen Zwilling 10 in dem Ellipsoid 22 vorliegen. Dies ist in den Schnitt Darstellungen der Figur 5, 5a, 5b, und 5c dargestellt. Für jeden Punkt 17 oder 17' wird ein Anomaliewert berechnet, und es wird dieser dann berücksichtigt, wenn der Druckkopf 14 ein weiteres Mal in die Nähe der so bestimmten Anomalie 8 kommt. Der Druckkopf 14 kann dabei die Anomalie 8 von mehreren Seiten räumlich tangieren, sodass durch Änderung der Prozessparameter in der Nähe der Anomalie 8 diese ausgeglichen werden kann, sodass ein möglicherweise aus der Anomalie entstehender Defekt schon vor dessen Entstehen eliminiert werden kann. Der Vorteil gegenüber herkömmlichen additiven Herstellungsverfahren besteht durch dieses Vorgehen darin, dass bereits der Entstehung von Defekten durch das beschriebene Vorgehen entgegengewirkt wird und somit der Ausschuss vor Bauteilen 2 deutlich reduziert wird.

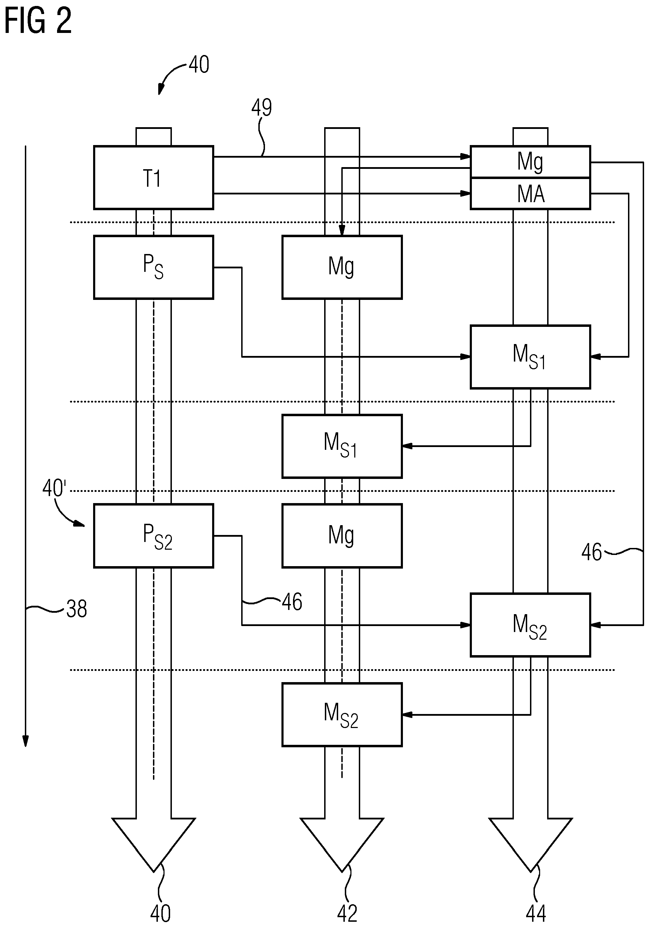

Eine wichtige Grundlage für die Behebung der Defekte ist die frühzeitige Erkennung dieser durch eine geeignete Auswertung der Prozessparameter und Prozessdaten während des Fertigungsprozesses. Dies erfolgt mittels Anomaliedetektionsmodellen. Der Ablauf des Prozesses unter Anwendung von Anomaliedetektionsmodellen sei an Figur 2 veranschaulicht. Hierin werden drei Schienen des Prozesses entlang einer Zeitachse 38 durch die drei Pfeile 40, 42, 44 veranschaulicht. Dabei wird der Ablauf des eigentlichen Prozess 40 links dargestellt, parallel dazu verläuft in der Mitte der dazu gehörige Status der Anomaliedetektion 42 und rechts außen der zeitliche Ablauf der Trainingsphasen 44 von Anomaliedetektionsmodellen während des Prozessablaufs. Die dünnen Pfeile zwischen den einzelnen Kästchen innerhalb des Diagramms stellen den Datenfluss 46 dar.

Der Prozessablauf gestaltet sich dabei wie folgt. Es werden zunächst Prozessdaten in Form von Trainingsdaten T1 beispielsweise aus früheren Prozessen generiert. Diese werden einem generalisierten Anomaliedetektionsmodell Mg zugeführt, mittels dessen der Prozess zu Beginn überwacht wird (Ps). Das generalisierte Anomaliedetektionsmodell Mg wird in einer ersten Phase des Prozesses eingesetzt, um Anomalien zu erkennen. Das generalisiertes Anomaliedetektionsmodell Mg ist wie bereits einleitend dargelegt, ein auf verfügbaren Trainingsdaten angelerntes Modell, wobei dem Anlernen das Ziel zugrunde liegt, das Modell zu generieren, das eine hohe Genauigkeit bei der Berechnung der Ausgangsdaten basierend auf den Eingangsdaten für alle Parametersätze hat. Das generalisierte Anomaliedetektionsmodell Mg ist bei verschiedenen Parametersätzen einsetzbar, allerdings weist es eine geringere Genauigkeit der Berechnungen im Vergleich zu einem spezialisierten Modell MS1 auf.

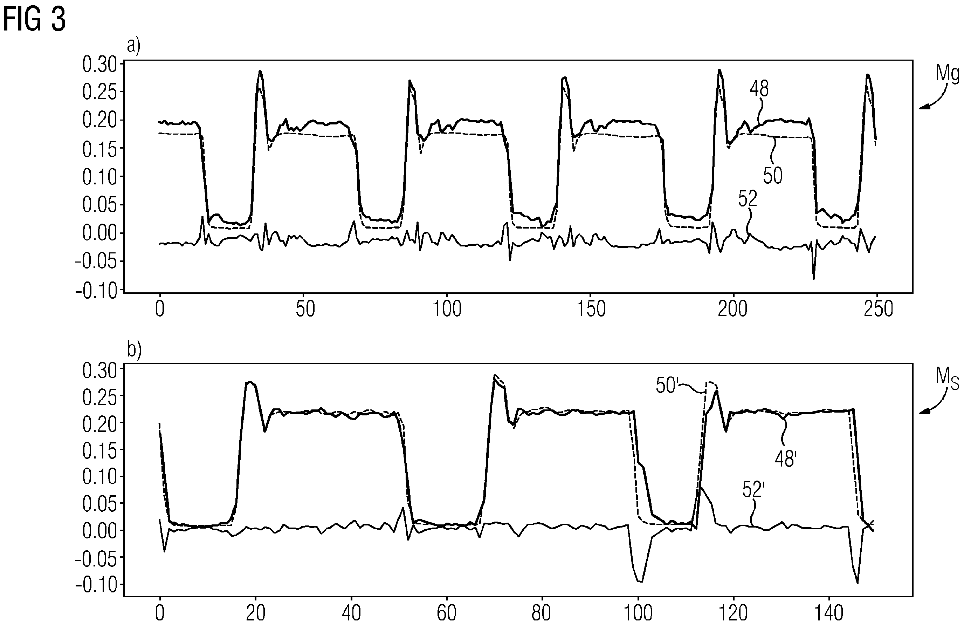

Zur Veranschaulichung der Wirkweise des generalisierte Anomaliedetektionsmodell Mg sind in Figur 3 zwei verschiedene Graphen entlang einer Zeitachse aufgetragen. An der y-Achse ist die normalisierte Spannung bzw. die Differenz der realen und vorhergesagten normalisierten Spannung aufgetragen (weshalb die Achse einheitslos ist). Hierbei ist in Figur 3a die Vorhersage von Prozessdaten und somit im Weiteren von Anomalien mittels des generalisierten Anomaliedetektionsmodell 48 dargestellt, das weitgehend aber im Detail eher grob mit den reellen, gemessenen Daten 50 übereinstimmt. Mit dem Graph 52 ist der Fehlerabstand zwischen den Kurven 48 und 50 wiedergegeben.

Während der Prozess fortgeführt wird und mögliche Anomalien im entstehenden Bauteil 2 mittels des generalisierten Anomaliedetektionsmodell Mg vorhergesagt und somit detektiert werden, wird gleichzeitig mittels eines adaptiven Anomaliedetektionsmodell Ma(Figur 2) durch mehrere Iterationszyklen das spezialisierte Anomaliedetektionsmodell Ms1 entwickelt. Die Zeit zur Entwicklung dieses spezialisierten Anomaliedetektionsmodell Ms1 dauert je nach Prozessführung zwischen 0,5 s und 5 s, in der Regel zwischen 1 s und 3 s. Ist die Entwicklung des spezialisierten Anomaliedetektionsmodell Ms1 aus dem adaptiven Anomaliedetektionsmodell Ma abgeschlossen, wird das generalisierte Anomaliedetektionsmodell Mg abgelöst und die weiter Anomaliedetektion mittels für diesen Prozess spezialisierte Anomaliedetektionsmodell Ms1 fortgeführt. Dies stellt eine zweite Phase, die Hauptphase des Prozesses dar. In Figur 3b ist zu erkennen, dass die modellierten Daten 48'deutlich besser zu den gemessenen Daten 50 passen, als dies mit dem generalisierten Anomaliedetektionsmodell gemäß Figur 3a der Fall ist.

Die Zeit der zweiten Phase, in der der Prozess 40 mit dem generalisierten Anomaliedetektionsmodell Mg betrieben wird, ist demnach relativ kurz und der größte Teil des Prozesses wird mit dem iterativ mittels des adaptiven Anomaliedetektionsmodell Ma erstellten spezialisierten Anomaliedetektionsmodell Ms1 fortgeführt. Dieses spezialisierte Anomaliedetektionsmodell Ms1 kann in einer Datenbank abgelegt werden und bei Herstellung eines Bauteils mit demselben Prozessparametersatz wieder herangezogen werden, ohne dass in diesem Fall der Prozessbeginn mit dem generalisierten Anomaliedetektionsmodell Mg durchgeführt werden muss.

Ein weiterer Prozess Ps2, auf dem Prozesspfeil mit 40' gekennzeichnet, unter Nutzung eines neuen Parametersatzes startet allerdings wieder zunächst unter Verwendung des generalisierten Anomaliedetektionsmodells, wobei parallel gemäß Pfeil 44 ein weiteres spezialisiertes Anomaliedetektionsmodell Ms2 mittels des adaptiven Anomaliedetektionsmodell Ma angelernt wird und durch den Datenfluss 46 Daten aus einem ersten Trainingsintervall dem adaptiven Anomaliedetektionsmodell Ma zur Verfügung gestellt werden.

Das bezüglich der Figuren 1-3 beschriebene Verfahren wird im Weiteren mit anderen Aspekten detaillierter erläutert. Zur Integration des zeitlichen Kontexts werden (Neurale Netze-) Modelle verwendet, die auf Basis von vergangenen Werten (z.B. der letzten 0,5 Sekunden) den aktuellen (Daten)Punkt 17 hinsichtlich eines Anomaliewerts bewerten. Die Zeitspanne, die als zeitlicher Kontext verwendet wird, ändert sich dabei dynamisch abhängig davon, wie hoch die aktuelle Schweißgeschwindigkeit (also die Vorschubgeschwindigkeit des Drucckopfs 14) ist und wie lang das Schweißbad ist. Die Länge des Schweißbades ist beispielsweise über die Schweißkamera 30 in Verbindung mit einer Computer Vision Algorithmen Auswertung wie z.B. Canny Edge Detection erfassbar. Dadurch ist stets sichergestellt, dass alle Prozesswerte, die für das aktuelle flüssigen Schweißbad relevant sind, in die Berechnung des Anomaliewerts einfließen.

Zur Analyse der Daten können entweder Regressionsmodelle (Prädiktion) verwendet werden, wie z.B. Seasonal ARIMA Modelle oder Neuronale Netze auf Basis von Conv1D oder RNN/LSTM Elementen, oder Modelle zur Rekonstruktion der Daten mithilfe von Autoencodern. Zur Vorhersage der Daten können neben den RNN/LSTMs mit einem zeitlichen Speicher auch batchweise verarbeitende CNN-Strukturen genutzt werden.

Zeitliche Strukturen in den Daten, wie beispielsweise Frequenzänderungen oder unregelmäßige Muster, werden so in die Prozessbewertung einbezogen. Für ein Training müssen Prozessdaten mit konstanten Prozessparametern verwendet werden, um eine hohe Genauigkeit zu erreichen.

Bevorzugt wird jedem vom Druckkopf 14 angefahrenen Ort (Position 12 des Druckkopfs 14) ein Zeitstempel gegeben werden, der Informationen darüber gibt, wann dieser angefahren wurde.

Der räumliche Kontext beinhaltet Informationen über lagenübergreifend relevanten Informationen z.B. aus der vorherigen Schicht oder von angrenzenden Schweißtracks. Dazu wird wie beschrieben während des Fertigungsprozesses simultan ein digitales Abbild also der digitale Zwilling 10 des Bauteils 2 erstellt, indem alle relevanten Informationen gespeichert sind. Dieser digitale digitaler Zwilling 10 umfasst eine Punktewolke, bei der für jeden Punkt eine Bewertung des Prozesszustands (z.B. normal/abnormal, Anomaliewert, Art der Anomalie, ...) sowie ein Zeitstempel hinterlegt sind. Die Punktewolke kann dabei räumlich strukturiert abgespeichert werden, damit eine effizientere Abfrage nach räumlichen Strukturen wie z.B. einem Doppelellipsoid oder einer Kugel möglich wird. Eine solche Datenstruktur ist beispielsweise der Octree, der r-tree oder der kd-tree, die über ihre baumartige Struktur eine schnelle Suche nach Punkten im Raum ermöglichen.

Zur Integration des räumlichen Kontexts in die Berechnung des Anomaliewerts eines aktuellen Arbeitspunkts 19 (der räulich äquidistant mit dem Druckkopf in Verbindung steht) wird der Raum um den aktuellen Arbeitspunkt 19 in die Datenanalyse mit einbezogen. Dazu wird zunächst ein dreidimensionaler Arbeitsbereich 18 um den Arbeitspunkt 19 definiert, über den die räumliche Relevanz der Datenpunkte 17, 17' festgestellt wird. Dieser Arbeitsbereich 18 umfasst dabei den Bereich, der vom Schweißbad, also der während des additiven Fertigens flüssigen Phase 20 eingenommen wird. Als Vereinfachung kann hierbei eine Kugel oder weiter verallgemeinert ein Ellipsoid bzw. noch weiter verallgemeinert ein Doppel-Ellipsoid gemäß Fig. 3 verwendet werden.

Dabei können sich die Achslängen der Ellipsoiden adaptiv an die Geometrie des Schweißbads anpassen. Ein Abgleich kann hierbei dynamisch entweder auf Basis von Sensordaten wie beispielsweise von der Schweißkamera 30 (Geometrie des Schweißbad extrahieren), mithilfe von Prozessparametern wie beispielsweise der Prozessgeschwindigkeit (eine höhere Schweißgeschwindigkeit führt zu einem dünneren, längeren Ellipsoid) oder auf Basis einer zuvor durchgeführten thermischen Simulation (Temperaturverlauf Größe und Form des Schweißbads) stattfinden. Weiterhin können die Zeitstempel der enthaltenen Punkte 17 oder Simulationsergebnisse einbezogen werden, um einen Rückschluss auf das vorliegende Abkühlungsverhalten und somit die Größe des Schweißbads zu ziehen.

Basierend auf dem definierten Arbeitsbereich 18 werden Punkte 17 selektiert, die in der Prozessvergangenheit angelegt und mit Meta-Informationen wie beispielsweise einem Anomaliewahrscheinlichkeitswert, einem Wert für die Defektkritikalität oder einem Defekttyp angereichert sind. Dafür werden Datenstrukturen wie z.B. ein Octree verwendet, die Spatial Indexing und somit eine optimierte räumliche Suche nach den betroffenen Punkten erlauben. Jeder Punkt enthält dabei Informationen über lokale Prozessanomalien bzw. -defekte, sodass sich eine räumlich selektierte Punktewolke mit relevanten Informationen in der näheren Umgebung des aktuellen Arbeitspunkts 19 ergibt. Die erhaltenen Informationen werden nun verwendet, um einerseits die Anomalieerkennung zu verbessern und zum anderen Anpassungen am Prozess vorzunehmen.

Das Ergebnis der Anomaliebewertung durch die Modelle (inkl. zeitlichem Kontext) ist ein Anomaliewert, der eine Aussage über die Wahrscheinlichkeit für die Anomalie und damit des Defekts trifft. An dieser Stelle wird nun der räumliche Kontext auf zwei verschiedene Arten einbezogen: Wenn eine Anomalie erkannt wurde, kann diese über die räumlichen Kontextinformationen mit anderen Anomalien semantisch verbunden werden. Dadurch wird die räumliche Ausbreitung der Anomalie und damit des potenziellen Defekts sichtbar. Dabei bildet der zuvor genannte Doppel-Ellipsoid den relevanten Raum ab, in dem Defekte miteinander korreliert werden. Wenn z.B. in der ersten Lage eine Oxidation entsteht, wird in der Folge Lage ein Problem mit der Anbindung erzeugt. Diese beiden Defekte hängen miteinander zusammen, sodass nun die räumliche Ausbreitung des abnormalen Bereichs im Bauteil besser abgeschätzt werden kann.

Wenn sich beispielsweise in einem hochbelasteten Bereich eines Bauteils mehrere potenzielle Anomalien mit jeweils niedrigen Anomaliewert finden, die jede für sich nicht zu Ausschuss führen würde, die aber gemeinsam zu einem Versagen des Bauteils führen, kann darüber hinaus die Anomaliedichte bestimmt werden, um so abzuschätzen, ob eine kritische Anhäufung von Anomalien in einem Bauteilbereich erreicht ist. Dabei nimmt der Kontextraum für die Anomaliedichte nicht zwangsläufig nur den Raum des Schweißbads (flüssige Phase 20) ein, sondern kann abhängig vom Bauteil 2 auch größer sein (z.B. im Bereich von dünnen Stegen, die auf Grund von Anomalien sonst zu ungewollten Sollbruchstellen werden könnten). Damit kann in-situ eine Anomaliedichte im Bauteil 2 bestimmt werden. Überschreitet diese einen Grenzwert, kann der Prozess frühzeitig gestoppt werden und so Kosten wegen Ausschuss reduziert werden.

Mithilfe des zeitlichen und räumlichen Kontexts kann darüber hinaus eine Klassifizierung der Defekte vorgenommen werden. Dazu wird ein Neurales Netzwerk zur Klassifizierung verwendet, das als Eingangsgrößen vorverarbeitete Prozesswerte (bei prädiktiven Modellen Distanz zwischen vorhergesagtem und realem Wert oder bei Modellen zur Rekonstruktion der Rekonstruktionsfehler) annimmt. In einer letzten Schicht wird eine sigmoid-Function verwendet, um jedem Defekt einen Wahrscheinlichkeitswert zuzuweisen. Wenn beispielsweise bekannt ist, dass die vorherige Lage bereits deutlich abgekühlt ist, da der Unterschied der Zeitstempel hoch ist, kann mit höherer Wahrscheinlichkeit auf ein Adhäsionsdefekt geschlossen werden. Weiterhin liegt beispielsweise bei einer Oxidation in einer benachbarten Lage eine höhere Wahrscheinlichkeit für einen Defekt wegen Schmutzeinschlüssen vor.

### Bezugszeichenliste

- 2: Bauteil
- 4: Steuerung
- 6: Sensoren
- 8: Anomalie
- 10: digitaler Zwilling
- 12: Position Druckkopf
- 14: Druckkopf
- 16: Punktewolke
- 17, 17': Punkte
- 18: Arbeitsbereich
- 19: Arbeitspunkt
- 20: flüssige Phase
- 22: Ellipsoid
- 24: Roboterarm
- 26: Elektrode
- 28: Schweißdraht
- 30: Schweißkamera
- 32: Werktisch
- 34: Energieversorgung
- 36: Vorfahrweg Werktisch
- P_{S}: Prozessstart
- 38: Prozesszeitachse
- 40: Prozess
- 42: Anomaliedetektion
- 44: Trennung
- 46: Datenfluss
- T1: Trainingsdaten
- Mg: generalisiertes Anomaliedetektionsmodell (ADM)
- MA: adaptive ADM
- MS1: spezialisiertes ADM
- 48: modellierte Daten
- 50: gemessene Daten
- 52: Fehlerabstand

## Patentansprüche

1. Verfahren zu additiven Fertigung eines Bauteils 2 umfassend folgende Schritte:
- Erstellen eines Maschinen Codes
- Erstellen eines generalisierten Anomaliedetektionsmodells und Erstellen eines adaptiven Anomaliedetektionsmodells
- Übertragen des Maschinen Codes und der Detektionsmodelle an eine Steuerungen
- Starten des Fertigungsprozesses
- Überwachung des Prozesses mit Sensoren
- Auswertung von Sensorsignalen des Fertigungsprozesses mit Hilfe des generalisierten Anomaliedetektionsmodells
- paralleles Anlernen eines *spezialisiertes Anomaliedetektionsmodell aus einem* adaptiven Anomaliedetektionsmodells mittels Prozessdaten des laufenden Fertigungsprozesses
- Detektion von Anomalien in der Fertigung des Bauteils mit Hilfe des spezialisierten Anomaliedetektionsmodells während des Fertigungsprozesses.

2. Verfahren nach Anspruch 1, **dadurch gekennzeichnet, dass** ein bezüglich eines Prozessparametersatz angelerntes adaptive Anomaliedetektionsmodell als spezialisiertes Anomaliedetektionsmodell abgespeichert wird und bei einer erneuten Nutzung des Prozessparametersatzes das spezialisierte Anomaliedetektionsmodell verwendet wird.

3. Verfahren nach Anspruch 1 oder 2, **dadurch gekennzeichnet, dass** das spezialisierte Anomaliedetektionsmodell bei Starten eines zweiten Fertigungsprozesses mit einem zweiten Prozessparametersatz herangezogen wird und durch das adaptive Anomaliedetektionsmodell angelernt wird.

4. Verfahren nach einem der vorhergehenden, umfassend folgende weitere Merkmale:
paralleler Aufbau eines digitalen Zwillings 10 des entstehenden Bauteils 2 während des Prozesses aus den Sensordaten umfassend Positionsdaten detektierter Anomalien 8
- Prädiktion über die Position 12 eines Druckkopfs 14 zu einer bestimmten Zeit mittels des Maschinen Codes
- Analyse eines Arbeitsbereiches rund um diese Position in Hinblick auf vorhandene Anomalien mittels des digitalen Zwillings
- Anpassung der Prozessparameter bei Erreichen des Arbeitsbereiches zur Behebung der Anomalie.

5. Verfahren nach Anspruch 4, **dadurch gekennzeichnet, dass** ein Einbringen der durch die Anomaliedetektionsmodelle ermittelten Anomalien in den Digitalen Zwilling erfolgt.

6. Verfahren nach einem der Ansprüche 4 oder 5, **dadurch gekennzeichnet, dass** jeder vom Druckkopf 14 angefahrenen Position 12 ein Zeitstempel zugeordnet wird.

7. Verfahren nach einem der Ansprüche 4 bis 6, **dadurch gekennzeichnet, dass** der digitale Zwilling 10 eine Punktwolke 16 umfasst und zu jedem Punkt ein Anomaliewert mittels eines der Anomaliedetektionsmodelle ermittelt wird zu dem ein Prozesszustand hinterlegt sind.

8. Verfahren nach Anspruch 7, **dadurch gekennzeichnet, dass** zur Ermittlung des Anomaliewerts Daten eines Arbeitsbereiches 18 aus benachbarten Punkten 17, 17' mit einbezogen werden.

9. Verfahren nach Anspruch 8, **dadurch gekennzeichnet, dass** der Arbeitsbereich 18 das räumliche Ausmaß einer zum Beobachtungszeitpunkt vorherrschenden flüssigen Phase 20 aufweist.

10. Verfahren nach einem der vorhergehenden Ansprüche, **dadurch gekennzeichnet, dass** die Punktewolke in einer räumlich strukturierten Datenstruktur in Form eines Octrees dargestellt wird.

11. Verfahren nach Anspruch 7, **dadurch gekennzeichnet, dass** der Arbeitsbereich 18 durch ein Doppel-Ellipsoid 22 dargestellt wird.

12. Verfahren nach einem der vorhergehenden Ansprüche, **dadurch gekennzeichnet, dass** die Anpassung der Prozessparameter zur Behebung der Anomalie 8 einen höheren Wärmeeintrags umfasst.

13. Verfahren nach einem der vorhergehenden Ansprüche, **dadurch gekennzeichnet, dass** die Anpassung der Prozessparameter zur Behebung der Anomalie 8 einen niedrigere Druckkopfgeschwindigkeit umfasst.

14. Verfahren nach einem der Vorhergehenden Ansprüche, **dadurch gekennzeichnet, dass** das additive Fertigungsverfahren ein Lichtbogendrahtauftragsschweißen ist.

15. Additive Fertigungsvorrichtung zur Durchführung eines Verfahrens nach einem der Ansprüche 1 bis 14 umfassend einen Roboterarm, eine Steuerung und einen Druckkopf sowie Sensoren zur Erfassung von Prozessparametern.
